# EUROPEAN PATENT APPLICATION

(11) **EP 4 625 369 A1**
(43) Date of publication of application: **01.10.2025**
(21) Application number: 24822226.7
(22) Date of filing: 30.01.2024
(51) Int. Cl.: G06V 40/20

(54) **GESTURE RECOGNITION METHOD, HEAD-MOUNTED WEARABLE DEVICE, AND STORAGE MEDIUM**

(30) Priority: 15.06.2023 CN 202310713412
(71) Applicant: Huawei Technologies Co., Ltd., Shenzhen, Guangdong 518129 (CN)
(72) Inventor: LIN, Peizhen, Shenzhen, Guangdong 518129 (CN); ZHANG, Kai, Shenzhen, Guangdong 518129 (CN)
(74) Representative: Thun, Clemens
(86) International application number: PCT/CN2024/074607
(87) International publication number: WO 2024/255265

(57) **Abstract**

This application provides a gesture recognition method, a head-mounted wearable device, and a storage medium. The head-mounted wearable device includes at least two types of the following cameras: a grayscale camera, a color camera, a depth camera, and an event camera. The method includes: obtaining first to-be-detected image data, where the first to-be-detected image data includes at least two images captured by the at least two types of cameras at a first moment; inputting the first to-be-detected image data into a key point detection model, to obtain a first group of 3D hand key point coordinates, where the key point detection model is obtained through training based on at least one piece of sample image data, and each piece of sample image data includes at least two preset gesture images labeled with 3D hand key point coordinates; and recognizing a gesture type corresponding to the first to-be-detected image data based on the first group of 3D hand key point coordinates. In this way, accuracy of gesture recognition in a complex scene can be improved.

## Description

### CROSS-REFERENCE TO RELATED APPLICATIONS

This application claims priority to Chinese Patent Application No. 202310713412.9, filed with the China National Intellectual Property Administration on June 15, 2023 and entitled "GESTURE RECOGNITION METHOD, HEAD-MOUNTED WEARABLE DEVICE, AND STORAGE MEDIUM", which is incorporated herein by reference in its entirety.

### TECHNICAL FIELD

This application relates to the field of electronic technologies, and in particular, to a gesture recognition method, a head-mounted wearable device, and a storage medium.

### BACKGROUND

With development of virtual reality technologies, head-mounted wearable devices develop increasingly rapidly. When a user uses the head-mounted wearable device, gesture interaction becomes increasingly important in a use process of the user. However, an environment is usually complex and changeable, and the head-mounted wearable device uses only a grayscale camera or a color camera to capture an image to complete gesture interaction, which is not enough for normal use in a weak-light environment or another complex environment. Consequently, when the head-mounted wearable device recognizes a user gesture based on a shot image, a gesture recognition success rate is low.

### SUMMARY

Embodiments of this application provide a gesture recognition method, a head-mounted wearable device, and a storage medium, to increase a gesture recognition success rate of the head-mounted wearable device.

According to a first aspect, this application provides a gesture recognition method, applied to a head-mounted wearable device. The head-mounted wearable device includes at least two types of the following cameras: a grayscale camera, a color camera, a depth camera, and an event camera. The method includes: The head-mounted wearable device obtains first to-be-detected image data, where the first to-be-detected image data includes at least two images captured by the at least two types of cameras at a first moment. The head-mounted wearable device inputs the first to-be-detected image data into a key point detection model, to obtain a first group of 3D hand key point coordinates, where the key point detection model is obtained through training based on at least one piece of sample image data, each piece of sample image data includes at least two preset gesture images labeled with 3D hand key point coordinates, and the at least two preset gesture images are captured by different types of cameras. Then, the head-mounted wearable device recognizes a gesture type corresponding to the first to-be-detected image data based on the first group of 3D hand key point coordinates.

In the method, because the first to-be-detected image data includes images captured by a plurality of types of cameras, even if the first to-be-detected image data is obtained in a complex scene or a weak-light scene, sufficient information can be obtained for gesture recognition, thereby improving accuracy of gesture recognition in the complex scene.

In some embodiments, each of the at least two preset gesture images is further labeled with a camera status value, that is, each piece of sample image data includes at least two preset gesture images labeled with 3D hand key point coordinates and camera status values. Inputting the first to-be-detected image data into the key point detection model, to obtain the first group of 3D hand key point coordinates includes: inputting the first to-be-detected image data into the key point detection model, to obtain the first group of 3D hand key point coordinates and a first group of camera status values corresponding to the cameras included in the head-mounted wearable device. The head-mounted wearable device may accurately recognize the gesture type corresponding to the first to-be-detected image data based on the first group of 3D hand key point coordinates. In addition, the first group of camera status values may be used to properly adjust statuses, at a second moment, of the cameras included in the head-mounted wearable device.

In some embodiments, the method further includes: If a camera status of each camera included in the head-mounted wearable device does not match the first group of camera status values, the head-mounted wearable device adjusts, based on the first group of camera status values, the status of the camera, in the head-mounted wearable device, that does not match the first group of camera status values. A manner for conveniently adjusting the head-mounted wearable device is provided in this embodiment.

In some embodiments, after the head-mounted wearable device adjusts, based on the first group of camera status values, the status of the camera that does not match the first group of camera status values, the method further includes: The head-mounted wearable device obtains second to-be-detected image data, where the second to-be-detected image data includes an image captured at the second moment by a camera in an on state in the head-mounted wearable device, and the second moment is a next moment of the first moment. The head-mounted wearable device inputs the second to-be-detected image data into the key point detection model, to obtain a second group of hand key point coordinates; and recognizes a gesture type corresponding to the second to-be-detected image data based on the second group of hand key point coordinates. Because the second to-be-detected image data includes images captured by a plurality of types of cameras, even if the second to-be-detected image data is obtained in a complex scene or a weak-light scene, sufficient information can be obtained for gesture recognition, thereby improving accuracy of gesture recognition in the complex scene.

In some embodiments, the method further includes: if there is a camera in an off state in the cameras included in the head-mounted wearable device, when the head-mounted wearable device determines that a trigger condition is met, turning on the camera in the off state, where the trigger condition includes at least one of the following: A use scenario of the head-mounted wearable device is switched; a change value of ambient brightness exceeds a first threshold; a hand movement speed change exceeds a second threshold; and gesture complexity changes. In this embodiment, when the trigger condition is met, all cameras that are turned off may be triggered to be turned on, so that the head-mounted wearable device dynamically adjusts a status of the camera based on an actual scenario, and properly uses each camera.

According to a second aspect, this application provides a gesture recognition method, applied to a head-mounted wearable device. The head-mounted wearable device includes at least two types of the following cameras: a grayscale camera, a color camera, a depth camera, and an event camera. The method includes: obtaining third to-be-detected image data, where the third to-be-detected image data includes at least one grayscale image captured by the grayscale camera, at least one color image captured by the color camera, a depth image captured by the depth camera, and an event image captured by the event camera; segmenting a first image in the third to-be-detected image data to obtain N first sub-images, where the first image is a hand image in any one of the at least one grayscale image and the at least one color image, and N is an integer greater than 1; performing the following steps for each of the N first sub-images: determining a second sub-image that has a location relationship with the first sub-image from each of at least one second image, where the at least one second image includes at least one image other than the first image in the third to-be-detected image data; and inputting the first sub-image and/or at least one second sub-image into a key point detection model, to obtain a third group of output 3D hand key point coordinates corresponding to the first sub-image, where the key point detection model is obtained through training based on at least one piece of sample image data, each piece of sample image data includes at least two preset gesture images labeled with 3D hand key point coordinates, and L is an integer greater than 1; and recognizing a gesture type corresponding to the third to-be-detected image data based on the third group of 3D hand key point coordinates corresponding to each of the N first sub-images.

In the method, because the third to-be-detected image data includes images captured by a plurality of types of cameras, even if the third to-be-detected image data is obtained in a complex scene or a weak-light scene, sufficient information can be obtained for gesture recognition, thereby improving accuracy of gesture recognition in the complex scene. In addition, 3D key point recognition is performed on different areas of an image in the third to-be-detected image data, to implement accurate recognition in different areas.

In some embodiments, before determining the second sub-image that has the location relationship with the first sub-image from each of the at least one second image, the method further includes: inputting each of the N first sub-images into the key point detection model, to obtain coordinates of a key point included in each of the first sub-images; determining a key point importance indicator corresponding to each first sub-image based on the coordinates of the key point included in each of the N first sub-images; and determining the at least one second image from the third to-be-detected image data based on the key point importance indicator corresponding to each of the N first sub-images. In this embodiment, a key area for gesture recognition may be accurately recognized based on importance of key points in different areas, and then a corresponding image for inferring a 3D key point may be determined, to properly use computing power resources.

In some embodiments, the at least one second image includes the depth image and the event image. In this embodiment, an image for inferring a 3D hand key point is obtained from different areas of the depth image and the event image. Compared with obtaining of the image for inferring the 3D key point from the grayscale image or the color image, this can obtain more accurate 3D hand key point coordinates.

In some embodiments, segmenting the first image in the third to-be-detected image data to obtain the N first sub-images includes: segmenting the first image in the third to-be-detected image data based on N equal parts, to obtain the N first sub-images; or segmenting the first image in the third to-be-detected image data based on areas in which N hand parts are located, to obtain the N first sub-images. In this embodiment, a specific manner of accurately recognizing a 3D key point in different areas is provided, to improve flexibility of the gesture recognition method.

In some embodiments, before segmenting the first image in the third to-be-detected image data to obtain the N first sub-images, the method further includes: determining that the third to-be-detected image data includes a hand. In this embodiment, a manner of performing 3D key point recognition in different areas is provided.

According to a third aspect, this application provides a gesture recognition method, applied to a head-mounted wearable device. The head-mounted wearable device includes at least two types of the following cameras: a grayscale camera, a color camera, a depth camera, and an event camera. The method includes: obtaining fourth to-be-detected image data, where the fourth to-be-detected image data includes at least two images captured by the at least two types of cameras; determining a gesture level corresponding to the fourth to-be-detected image data; determining K images corresponding to the gesture level from the at least two images based on the gesture level, where K is an integer greater than 1; inputting the K images into a key point detection model, to obtain a fourth group of output 3D hand key point coordinates, where the key point detection model is obtained through training based on at least one piece of sample image data, each piece of sample image data includes at least two preset gesture images labeled with 3D hand key point coordinates, and L is an integer less than or equal to N; and recognizing a gesture type corresponding to the fourth to-be-detected image data based on the fourth group of 3D hand key point coordinates.

In the method, because the fourth to-be-detected image data includes images captured by a plurality of types of cameras, even if the fourth to-be-detected image data is obtained in a complex scene or a weak-light scene, sufficient information can be obtained for gesture recognition, thereby improving accuracy of gesture recognition in the complex scene. In addition, an image for inferring a 3D hand key point is determined based on different gesture levels, so that computing power resources of the head-mounted wearable device can be properly used.

In some embodiments, the gesture level is determined based on gesture complexity or a hand movement speed.

According to a fourth aspect, this application further provides a head-mounted wearable device. The head-mounted wearable device can implement the method implemented in any one of the first aspect to the third aspect, or implement the method in any possible implementation of any one of the first aspect to the third aspect. The head-mounted wearable device may be implemented by hardware, or may be implemented by executing corresponding software by hardware. The hardware or the software includes one or more units or modules corresponding to the foregoing function.

According to a fifth aspect, an embodiment of this application further provides a head-mounted wearable device. The head-mounted wearable device includes modules/units for performing the method implemented in any one of the first aspect to the third aspect or for implementing the method in any possible implementation of any one of the first aspect to the third aspect. These modules/units may be implemented by hardware, or may be implemented by executing corresponding software by hardware.

According to a sixth aspect, an embodiment of this application provides a head-mounted wearable device, including a memory, a processor, and a display. The display is configured to display a user interface, and the processor is configured to execute a computer program or instructions stored in the memory, so that the head-mounted wearable device implements the method implemented in any one of the first aspect to the third aspect, or implements the method in any possible implementation of any one of the first aspect to the third aspect.

According to a seventh aspect, an embodiment of this application further provides a computer-readable storage medium. The computer-readable storage medium includes a computer program. When the computer program is run on a head-mounted wearable device, the computer-readable storage medium is enabled to implement the method implemented in any one of the first aspect to the third aspect, or implement the method in any possible implementation of any one of the first aspect to the third aspect.

According to an eighth aspect, an embodiment of this application further provides a computer program product. When the computer program product is run on a head-mounted wearable device, the head-mounted wearable device is enabled to implement the method implemented in any one of the first aspect to the third aspect, or implement the method in any possible implementation of any one of the first aspect to the third aspect.

It should be understood that for beneficial effects of the fourth aspect to the eighth aspect of this application, refer to the related descriptions of the first aspect to the third aspect. Details are not described again.

### BRIEF DESCRIPTION OF DRAWINGS

FIG. 1 is a product diagram of a head-mounted wearable device according to an embodiment of this application;
FIG. 2 is a diagram of a hardware structure of a head-mounted wearable device according to an embodiment of this application;
FIG. 3 is a diagram of a software structure of a head-mounted wearable device according to an embodiment of this application;
FIG. 4A is a diagram of an architecture according to an embodiment of this application;
FIG. 4B to FIG. 4D are diagrams of gestures according to an embodiment of this application;
FIG. 4E is a diagram of another architecture according to an embodiment of this application;
FIG. 5 is a diagram of a process of training a key point detection model according to an embodiment of this application;
FIG. 6 is a flowchart of a gesture recognition method according to an embodiment of this application;
FIG. 7 is a diagram of a hand key point according to this application;
FIG. 8 is a flowchart of another gesture recognition method according to an embodiment of this application;
FIG. 9 is a flowchart of another gesture recognition method according to an embodiment of this application;
FIG. 10A to FIG. 10C are diagrams of a group of images according to an embodiment of this application;
FIG. 11A to FIG. 11E are diagrams of another group of images according to an embodiment of this application;
FIG. 12A to FIG. 12C are diagrams of a process of detecting a key point in different areas according to an embodiment of this application;
FIG. 13 is a diagram of a process of detecting a key point in different finger parts according to an embodiment of this application;
FIG. 14 is a flowchart of a gesture recognition method according to an embodiment of this application; and
FIG. 15 is a diagram of a structure of a head-mounted wearable device according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application.

The terms "one", "a", "the", and "this" of singular forms used in this specification and the appended claims of this application are also intended to include expressions such as "one or more", unless otherwise specified in the context clearly. It should be further understood that in embodiments of this application, "one or more" means one, two, or more, and the term "and/or" is an association relationship for describing associated objects, and indicates that three relationships may exist. For example, A and/or B may indicate the following cases: Only A exists, both A and B exist, and only B exists, where A and B may be singular or plural. The character "/" usually indicates an "or" relationship between associated objects.

Reference to "some embodiments" or the like described in this specification means that specific features, structures, or characteristics described with reference to the embodiments are included in one or more embodiments of this application. Therefore, the statements such as "in some embodiments", "in some other embodiments", and "in other embodiments" that appear at different locations in this specification do not necessarily refer to a same embodiment, but mean "one or more but not all embodiments", unless otherwise specifically emphasized in another manner. The terms "include", "comprise", "have", and variants thereof mean "including but not limited to", unless otherwise specifically emphasized in another manner.

"A plurality of" in embodiments of this application means "greater than or equal to two". It should be noted that in the descriptions of embodiments of this application, the terms such as "first" and "second" are merely intended for distinction in description, and cannot be understood as an indication or implication of relative importance, or cannot be understood as an indication or implication of a sequence.

This application provides a gesture recognition method, a head-mounted wearable device, and a storage medium, to increase a gesture recognition success rate of the head-mounted wearable device. The method and the head-mounted wearable device are based on a same technical concept. The method and the head-mounted wearable device have similar principles for resolving problems. Therefore, for implementations of the head-mounted wearable device and the method, mutual reference may be made. Repeated parts are not described.

In the solutions provided in embodiments of this application, the head-mounted wearable device includes a device (for example, a processor, an application processor, an image processor, or another processor) that can implement a data processing function. An example embodiment of the head-mounted wearable device includes but is not limited to a device equipped with iOS^{®}, Android^{®}, Microsoft^{®}, or another operating system. The head-mounted wearable device may alternatively be another portable device, for example, a laptop computer (laptop) with a touch-sensitive surface (for example, a touch panel). A specific form of the head-mounted wearable device is not limited in embodiments of this application.

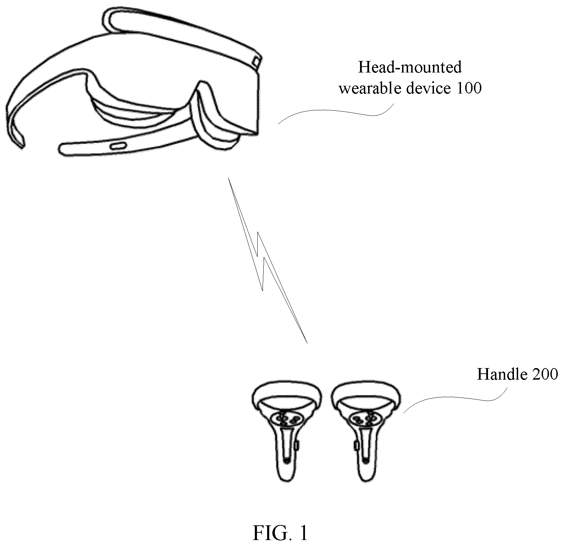

With reference to FIG. 1, the head-mounted wearable device may be a head-mounted wearable device 100 shown in FIG. 1. Based on the head-mounted wearable device 100 shown in FIG. 1, there may further be another variant structural form of the head-mounted wearable device. This is not limited herein. The head-mounted wearable device 100 may be smart glasses, for example, AR glasses or VR glasses. In this embodiment of this application, the head-mounted wearable device 100 may be controlled by a user by using a handle 200 in FIG. 1, or may be directly controlled by a user by using a finger, or may be controlled by using another device. This is not limited herein.

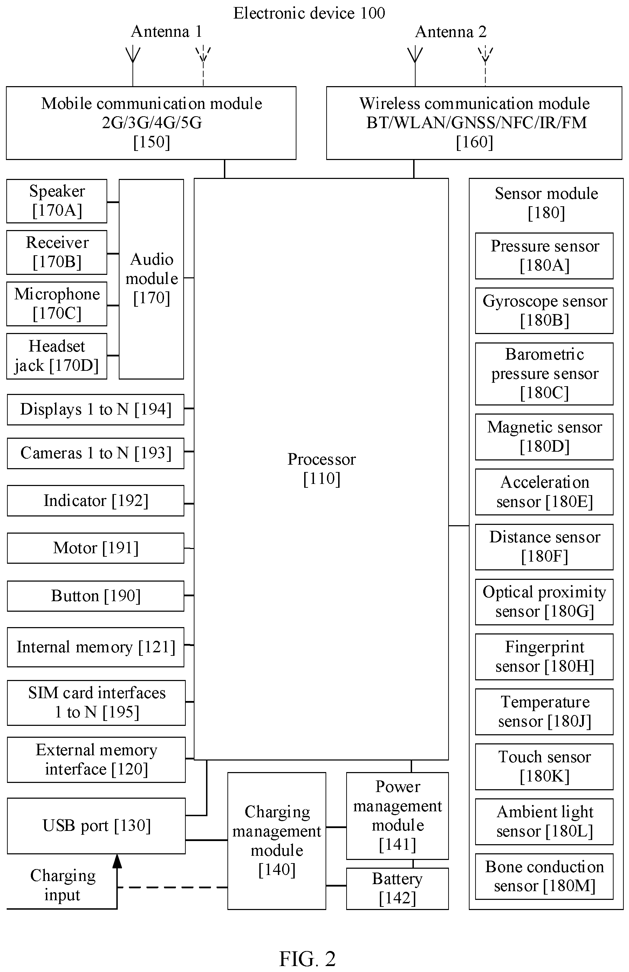

FIG. 2 is merely a diagram of a hardware structure of a head-mounted wearable device 100 according to an embodiment of this application. Based on the structure shown in FIG. 2, there may further be another variant structural form. As shown in FIG. 2, the head-mounted wearable device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The following describes in detail the parts of the head-mounted wearable device 100 shown in FIG. 2.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the head-mounted wearable device 100 may include one or more processors 110. The processor is a nerve center and a command center of the head-mounted wearable device 100. The processor may generate an operation control signal based on instruction operation code and a time series signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the instructions or the data may be directly invoked from the memory, to avoid repeated access and shorten a waiting time of the processor 110. Therefore, system efficiency can be improved.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like. It may be understood that an interface connection relationship between the modules shown in this embodiment of this application is merely an example for description, and does not constitute a limitation on the structure of the head-mounted wearable device 100.

The charging management module 140 is configured to receive a charging input from a charger. The power management module 141 is configured to connect to the battery 142, the charging management module 140, and the processor 110. A wireless communication function of the head-mounted wearable device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the head-mounted wearable device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the head-mounted wearable device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal obtained after modulation by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the head-mounted wearable device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components into which at least one communication processing module is integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the head-mounted wearable device 100, the antenna 1 and the mobile communication module 150 are coupled, and the antenna 2 and the wireless communication module 160 are coupled, so that the head-mounted wearable device 100 can communicate with a network and another device by using a wireless communication technology.

The head-mounted wearable device 100 may implement a display function by using the GPU, the display 194, the application processor, and the like. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like. In some embodiments, the head-mounted wearable device 100 may include one or N displays 194, where N is a positive integer greater than 1.

In some embodiments, the head-mounted wearable device 100 may include at least one camera 193, and an image may be captured by using the camera 193.

The external memory interface 120 may be configured to connect to an external memory card, for example, a micro SD card, to extend a storage capability of the head-mounted wearable device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system and an application required by at least one function. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various functional applications and data processing of the head-mounted wearable device 100.

The head-mounted wearable device 100 may implement an audio function, for example, music playing and recording, by using the audio module 170, the speaker 170A, the receiver 170B, the microphone 170C, the headset jack 170D, the application processor, and the like.

The head-mounted wearable device 100 may receive an input from the button 190, and generate a button signal input related to a user setting and function control of the head-mounted wearable device 100. For example, the button 190 may include a power button, a volume up button, a volume down button, and the like disposed on a right side of the head-mounted wearable device.

Although not shown in FIG. 2, the head-mounted wearable device 100 may further include a Bluetooth apparatus, a positioning apparatus, a flash, a micro projection apparatus, a near field communication (near field communication, NFC) apparatus, and the like. Details are not described herein.

It may be understood that the structure shown in this embodiment of this application does not constitute a specific limitation on the head-mounted wearable device 100. In some other embodiments of this application, the head-mounted wearable device 100 may include more or fewer parts than those shown in FIG. 2, or some parts may be combined, or some parts may be split, or there may be a different component arrangement. The parts shown in FIG. 2 may be implemented by hardware, software, or a combination of software and hardware.

All the following embodiments may be implemented in the head-mounted wearable device 100 having the foregoing hardware structure.

A software system of the head-mounted wearable device may use a layered architecture, an event-driven architecture, a microkernel architecture, a micro-service architecture, or a cloud architecture. In embodiments of this application, a software system (for example, an Android^{®} system) with a layered architecture is used as an example to describe a software structure of the head-mounted wearable device.

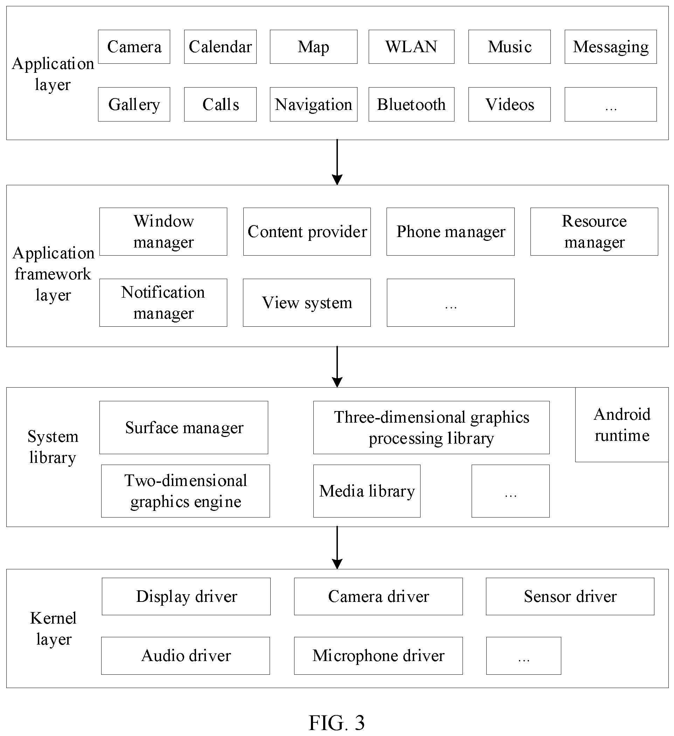

FIG. 3 is an example of a diagram of a software structure of a head-mounted wearable device according to an embodiment of this application. In the layered architecture, the software system is divided into several layers, and each layer has a clear role and task. The layers communicate with each other through a software interface. In some embodiments, the Android system is divided into four layers: an application layer (applications), an application framework layer (framework, FWK), an Android runtime (Android runtime) and system library, and a kernel layer. Layers of the software structure of the head-mounted wearable device are not limited in this embodiment of this application.

As shown in FIG. 3, the application layer may include a series of applications. The applications may include Phone, Camera, Gallery, Calendar, Calls, Map, Navigation, WLAN, Bluetooth, Music, Videos, Messaging, and another application.

The application framework layer provides an application programming interface (application programming interface, API) and a programming framework for the applications at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including a short message service notification icon may include a view for displaying text and a view for displaying a picture.

The phone manager is configured to provide a communication function for the head-mounted wearable device 100, for example, management of a call status (including answering, declining, or the like).

The resource manager provides various resources such as a localized string, an icon, a picture, a layout file, and a video file for an application.

The notification manager enables an application to display notification information in a status bar, may be configured to convey a notification message, and may automatically disappear after a short pause without requiring user interaction. For example, the notification manager is configured to: notify download completion, provide a message notification, and the like. The notification manager may alternatively be a notification that appears in a top status bar of the system in a form of a graph or scroll bar text, for example, a notification of an application running in background or a notification that appears on the screen in a form of a dialog window. For example, text information is prompted in the status bar, an alert tone is made, the head-mounted wearable device vibrates, or an indicator blinks.

The Android runtime includes a core library and a virtual machine. The Android runtime is responsible for scheduling and management of the Android system. The core library includes two parts: a function that needs to be called in a Java language and a core library of Android. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, a sensor driver, an audio driver, and a microphone driver.

The gesture recognition method provided in embodiments of this application may be applied to a plurality of scenarios.

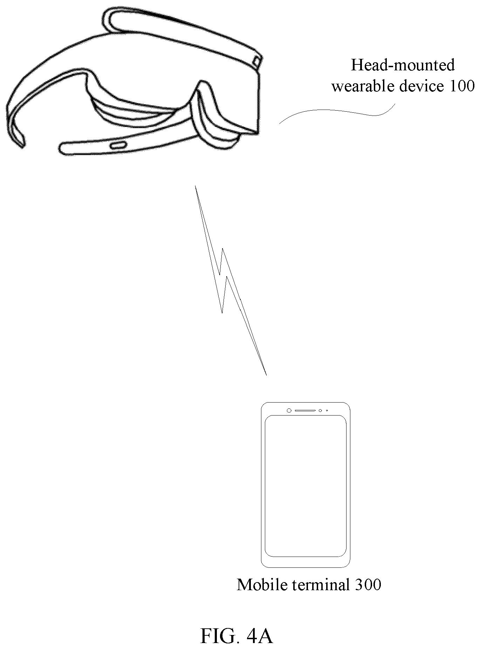

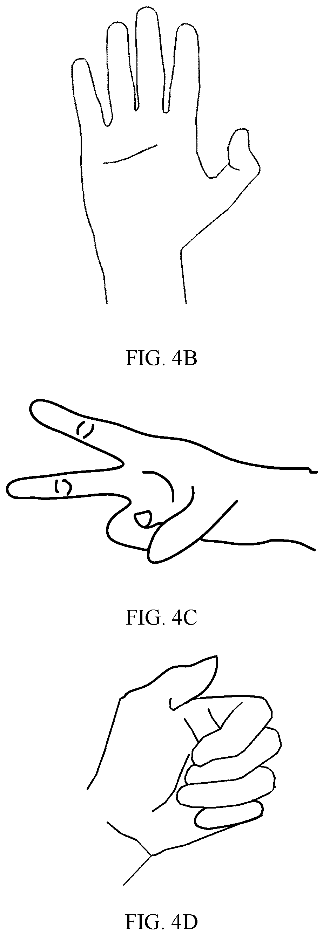

For example, there is a scenario in which when a head of a user wears a head-mounted wearable device, a communication function of a mobile terminal may be controlled by recognizing a user gesture. In this scenario, a binding relationship may be set between a gesture type of the user and a response function. For example, a "five fingers spread" gesture type is bound to an incoming call answering function. For another example, a "V-shape" gesture type is bound to an incoming call declining function. For example, the mobile terminal is a mobile phone 300. A system architecture shown in FIG. 4A includes a head-mounted wearable device 100 and the mobile phone 300. When the mobile phone 300 receives an incoming call prompt, the head-mounted wearable device 100 displays an incoming call interface. If the user makes a "five fingers spread" gesture shown in FIG. 4B, the head-mounted wearable device recognizes that a current gesture type of the user is the "five fingers spread" gesture type, and controls the mobile phone 300 to perform the incoming call answering function. In this way, the user can implement the incoming call answering function without removing the head-mounted wearable device 100. If the user makes a "V-shape" gesture shown in FIG. 4C, the head-mounted wearable device 100 recognizes that a current gesture type of the user is the "V-shape" gesture type, and controls the mobile phone 300 to perform the incoming call declining function. In this way, the user can implement the incoming call declining function without removing the head-mounted wearable device.

The gesture recognition method provided in this application may be further applied to another scenario. For example, a head-mounted wearable device may control a function of the head-mounted wearable device by recognizing a user gesture. For example, a user may recognize a type of the user gesture by using the head-mounted wearable device, and then control the head-mounted wearable device to open software installed in the head-mounted wearable device. For example, a "fist clenching" gesture type is bound to a function of opening Gallery. When the user makes a "fist clenching" gesture shown in FIG. 4D, the head-mounted wearable device recognizes that a current gesture type of the user is the "fist clenching" gesture type, and the head-mounted wearable device opens Gallery.

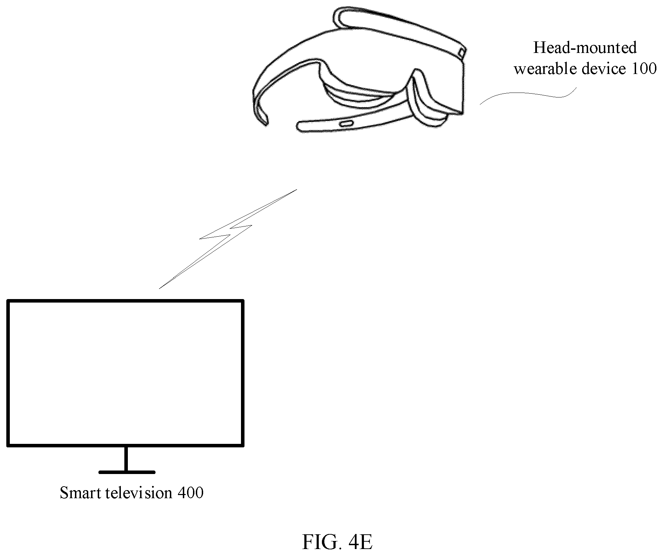

In addition, the gesture recognition method provided in this application may be further applied to another scenario. For example, in a smart home scenario, a user may recognize a type of a user gesture by using a head-mounted wearable device, and then deliver a control instruction to a smart home device (for example, a smart television or a desk lamp) in the smart home scenario. For example, the smart home device is a smart television 400. A system architecture shown in FIG. 4E includes a head-mounted wearable device 100 and the smart television 400. For example, a "five fingers spread" gesture type is bound to a function of turning on the smart television, and a "fist clenching" gesture type is bound to a function of turning off the smart television. If the user makes a "five fingers spread" gesture shown in FIG. 4B, and the head-mounted wearable device recognizes that a gesture type of the user is the "five fingers spread" gesture type, the head-mounted wearable device controls the smart television to be turned on. If the user makes a "fist clenching" gesture shown in FIG. 4D, and the head-mounted wearable device recognizes that a gesture type of the user is the "fist clenching" gesture type, the head-mounted wearable device controls the smart television to be turned off. The head-mounted wearable device provided in this application may be further applied to a scenario of controlling another device. Details are not described herein.

In embodiments of this application, the head-mounted wearable device may include at least two types of cameras. A specific quantity of cameras included in the head-mounted wearable device is not limited in the gesture recognition method provided in embodiments of this application. Details are not described below. In the following embodiments, an example in which the head-mounted wearable device includes four types of cameras, that is, a grayscale camera, a color camera, a depth camera, and an event camera, is used for description. When the head-mounted wearable device is used to capture an image, all or some of these cameras may be started. The head-mounted wearable device may capture a to-be-detected image by using at least one type of the following cameras: the grayscale camera, the color camera, the depth camera, and the event camera, then infer 3D hand key point coordinates corresponding to the to-be-detected image by using a key point detection model, and then recognize a corresponding gesture type based on the 3D hand key point coordinates.

The grayscale camera in embodiments of this application may be, for example, a binocular grayscale camera, a quadocular grayscale camera, a hexocular grayscale camera, or a grayscale camera with more lenses. The binocular grayscale camera may capture two grayscale images, the quadocular grayscale camera may capture two grayscale images, and the hexocular grayscale camera may capture two grayscale images. Details are not described below.

The color camera in embodiments of this application may be, for example, a binocular color camera, a quadocular color camera, a hexocular color camera, or a color camera with more lenses. The binocular color camera may capture two color images, the quadocular color camera may capture two color images, and the hexocular color camera may capture two color images. Details are not described below.

The depth camera in embodiments of this application may be, for example, an indirect time-of-flight (indirect time-of-flight, iToF) camera, a direct time-of-flight (direct time-of-flight, dToF) camera, or a structured light camera. Details are not described below.

Before gesture recognition is performed on the to-be-detected image, a process of training the key point detection model is first explained and described.

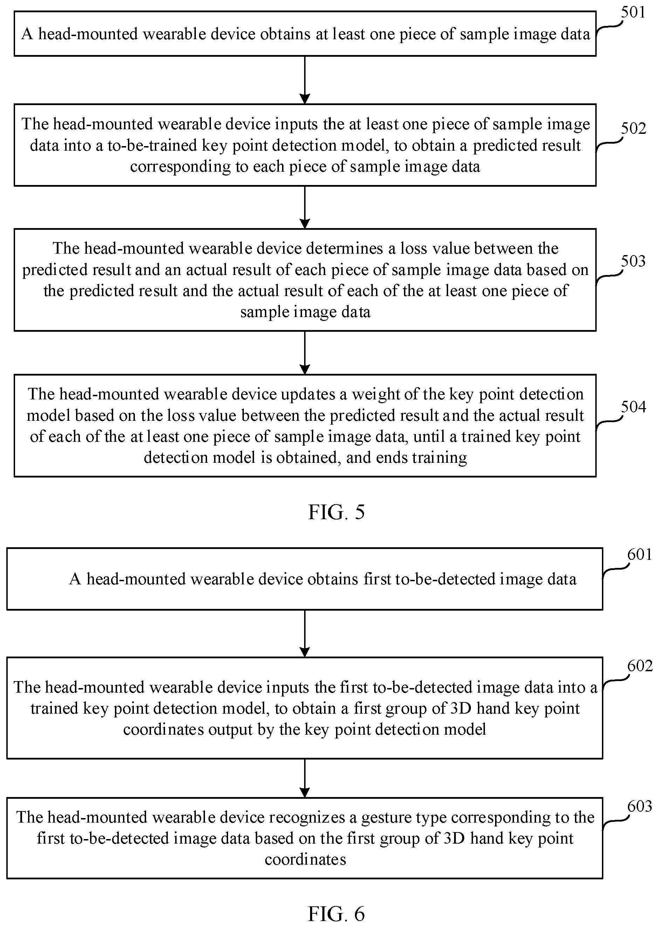

FIG. 5 is an example of a diagram of a process of training a key point detection model according to an embodiment of this application. The method is performed by a head-mounted wearable device. The process of training the key point detection model includes the following steps.

Step 501: The head-mounted wearable device obtains at least one piece of sample image data.

Each piece of sample image data includes a plurality of preset gesture images captured by different types of cameras.

The following describes a specific implementation of obtaining the sample image data.

For example, the head-mounted wearable device includes a grayscale camera, a color camera, a depth camera, and an event camera. All the four types of cameras are started. The four types of cameras may separately obtain a sufficient amount of raw image data in a plurality of complex scenes in advance. A scene 1 in which an indoor light is turned off and external ambient light is weak is used as an example, and the four types of cameras separately shoot a hand image of two hands in the scene 1. One piece of raw image data may be obtained each time shooting is performed in the scene 1, and includes six images: two dark grayscale images P1 and P2 shot by the binocular grayscale camera, two dark color images P3 and P4 shot by the binocular color camera, a depth image P5 that is shot by the depth camera and in which depth information of the two hands is included in front of the camera, and an event image P6 that is shot by the event camera and that includes information about a change in brightness in a process of extending the two hands.

In some embodiments, a user may label, with 3D hand key point coordinates, six images included in each piece of raw image data shot in the scene 1. The six images labeled with the 3D hand key point coordinates may be used as one piece of sample image data, and the sample image data includes a grayscale image P1 labeled with 3D hand key point coordinates X1, a grayscale image P2 labeled with 3D hand key point coordinates X2, a color image P3 labeled with 3D hand key point coordinates X3, a color image P4 labeled with 3D hand key point coordinates X4, a depth image P5 labeled with 3D hand key point coordinates X5, and an event image P6 labeled with 3D hand key point coordinates X6.

In some embodiments, in addition to labeling, with the 3D hand key point coordinates, the six images included in each piece of raw image data shot in the scene 1, the user may further label the six images with camera statuses. For example, in the scene 1 in which an indoor light is turned off and external ambient light is weak, the two grayscale images shot by the binocular grayscale camera include very little information, which is almost unused, and a camera status V1 may be labeled as 0 based on the two grayscale images. Similarly, the two color images shot by the binocular color camera also include very little information, and a camera status V2 may be labeled as 0 based on the two color images. The depth image shot by the depth camera in the scene 1 includes depth information, which is useful for a gesture recognition solution, and a camera status V3 may be labeled as 1 based on the depth image. The event camera is not affected by light during shooting. The shot event image includes event information, and a camera status V4 may be labeled as 1 based on the event image. Therefore, the six images labeled with the 3D hand key point coordinates and the camera statuses may be used as one piece of sample image data, and the sample image data includes the grayscale image P1 labeled with V1=0 and the 3D hand key point coordinates X1, the grayscale image P2 labeled with V1=0 and the 3D hand key point coordinates X2, the color image P3 labeled with V2=0 and the 3D hand key point coordinates X3, the color image P4 labeled with V2=0 and the 3D hand key point coordinates X4, the depth image P5 labeled with V3=1 and the 3D hand key point coordinates X5, and the event image P6 labeled with V4=1 and the 3D hand key point coordinates X6. One piece of sample image data may be considered as one training sample, and is used as a model input.

In this embodiment of this application, the head-mounted wearable device may perform shooting for a plurality of times in the scene 1, and may obtain one piece of sample image data during each time of shooting. Each piece of sample image data includes six images shot by the four types of cameras. For example, 100 pieces of sample image data are shot in the scene 1, and labeling of six images in the sample image data with camera statuses may be consistent with that in the foregoing example. If the 100 pieces of sample image data correspond to different user gestures, different 3D hand key point coordinates are correspondingly used for labeling.

To improve accuracy of gesture recognition by the key point detection model, when the key point detection model is trained, as much sample image data as possible may be collected in a plurality of complex scenes. For example, sample image data is collected in a scene in which an indoor window is opened and external ambient light is strong. For another example, sample image data is collected in an outdoor scene in which external ambient light is strong.

Step 502: The head-mounted wearable device inputs the at least one piece of sample image data into a to-be-trained key point detection model, to obtain a predicted result corresponding to each piece of sample image data.

For example, the six images labeled with the 3D hand key point coordinates are one piece of sample image data, and a predicted result corresponding to the sample image data includes a predicted value of the 3D hand key point coordinates corresponding to each of the six images, that is, a predicted value X1' of the 3D hand key point coordinates corresponding to the grayscale image P1, a predicted value X2' of the 3D hand key point coordinates corresponding to the grayscale image P2, a predicted value X3' of the 3D hand key point coordinates corresponding to the color image P3, a predicted value X4' of the 3D hand key point coordinates corresponding to the color image P4, a predicted value X5' of the 3D hand key point coordinates corresponding to the depth image P5, and a predicted value X6' of the 3D hand key point coordinates corresponding to the event image P6.

For example, the six images labeled with the 3D hand key point coordinates and the camera statuses are one piece of sample image data, and a predicted result corresponding to the sample image data includes a predicted value of the camera status and a predicted value of the 3D hand key point coordinates corresponding to each of the six images, that is, a predicted value V1' of the camera status and a predicted value X1' of the 3D hand key point coordinates corresponding to the grayscale image P1, a predicted value V1' of the camera status and a predicted value X2' of the 3D hand key point coordinates corresponding to the grayscale image P2, a predicted value V2' of the camera status and a predicted value X3' of the 3D hand key point coordinates corresponding to the color image P3, a predicted value V2' of the camera status and a predicted value X4' of the 3D hand key point coordinates corresponding to the color image P4, a predicted value V3' of the camera status and a predicted value X5' of the 3D hand key point coordinates corresponding to the depth image P5, and a predicted value V4' of the camera status and a predicted value X6' of the 3D hand key point coordinates corresponding to the event image P6.

Step 503: The head-mounted wearable device determines a loss value between the predicted result and an actual result of each piece of sample image data based on the predicted result and the actual result of each of the at least one piece of sample image data.

For example, the six images labeled with the 3D hand key point coordinates are one piece of sample image data, and the loss value between the predicted result and the actual result of each piece of sample image data may be determined based on a loss value W1 between an actual value and a predicted value of 3D hand key point coordinates corresponding to the sample image data. The actual value of the 3D hand key point coordinates corresponding to the sample image data is 3D hand key point coordinates with which each image included in the sample image data is labeled.

Herein, the loss value W1 may be determined based on a loss value W11 between an actual value X1 and the predicted value X1' of the 3D hand key point coordinates corresponding to the grayscale image P1, a loss value W12 between an actual value X2 and the predicted value X2' of the 3D hand key point coordinates corresponding to the grayscale image P2, a loss value W13 between an actual value X3 and the predicted value X3' of the 3D hand key point coordinates corresponding to the color image P3, a loss value W14 between an actual value X4 and the predicted value X4' of the 3D hand key point coordinates corresponding to the color image P4, a loss value W15 between an actual value X5 and the predicted value X5' of the 3D hand key point coordinates corresponding to the depth image P5, and a loss value W16 between an actual value X6 and the predicted value X6' of the 3D hand key point coordinates corresponding to the event image P6. Then, an average value of W11, W12, W13, W14, W15, and W16 may be used as the loss value W1 between the actual value and the predicted value of the 3D hand key point coordinates corresponding to the sample image data, or weighted summation may be performed on W11, W12, W13, W14, W15, and W16 based on a specific weight, to obtain the loss value W1. This is not limited in this application.

For example, the six images labeled with the 3D hand key point coordinates and the camera statuses are one piece of sample image data, and the loss value between the predicted result and the actual result of each piece of sample image data may be determined based on a loss value W2 between an actual value and a predicted value of a camera status corresponding to the sample image data and a loss value W1 between an actual value and a predicted value of 3D hand key point coordinates corresponding to the sample image data. For example, the loss value corresponding to the sample image data is a sum of the loss value W2 and the loss value W1. For another example, the loss value corresponding to the sample image data is an average value of the loss value W2 and the loss value W1. For another example, weight coefficients of the loss value W2 and the loss value W1 are separately set, a first product of the loss value W2 and the weight coefficient of the loss value W2 and a second product of the loss value W1 and the weight coefficient of the loss value W1 are separately determined, and the loss value corresponding to the sample image data is a sum of the first product and the second product. For the loss value W1, refer to the foregoing example. Details are not described herein again.

Herein, the loss value W2 may be determined based on a loss value W21 between an actual value V1 and the predicted value V1' of the camera status corresponding to the grayscale image P1, a loss value W22 between an actual value V1 and the predicted value V1' of the camera status corresponding to the grayscale image P2, a loss value W23 between an actual value V2 and the predicted value V2' of the camera status corresponding to the color image P3, a loss value W24 between an actual value V2 and the predicted value V2' of the camera status corresponding to the color image P4, a loss value W25 between an actual value V3 and the predicted value V3' of the camera status corresponding to the depth image P5, and a loss value W26 between an actual value V4 and the predicted value V4' of the camera status corresponding to the event image P6. Then, an average value of W21, W22, W23, W24, W25, and W26 may be used as the loss value W2 between the actual value and the predicted value of the camera status corresponding to the sample image data, or weighted summation may be performed on W21, W22, W23, W24, W25, and W26 based on a specific weight, to obtain the loss value W2. This is not limited in this application.

Step 504: The head-mounted wearable device updates a weight of the key point detection model based on the loss value between the predicted result and the actual result of each of the at least one piece of sample image data, until a trained key point detection model is obtained, and ends training.

The process of step 504 may be completed by the head-mounted wearable device, or may be completed by another device. When step 504 is completed by the another device, the another device may transmit a model parameter corresponding to the trained key point detection model to the head-mounted wearable device, so that the head-mounted wearable device updates the key point detection model.

Step 504 may be implemented in the following manner: It is determined whether the loss value between the predicted result and the actual result of the sample image data is less than a preset expected value. If the loss value between the predicted result and the actual result of the sample image data is less than the preset expected value, it indicates that the predicted result is close enough to the actual result, the trained key point detection model is obtained, and training is ended. If the loss value between the predicted result and the actual result of the sample image data is not less than the preset expected value, a loss value of one or more pieces of sample image data is input, through backpropagation, into the key point detection model that is being trained, and the weight of the key point detection model is updated to obtain an updated key point detection model. Then, step 502 to step 504 continue to be repeated, the loss value is continuously returned, the weight of the key point detection model is continuously updated, and the loss value of the sample image data is continuously obtained by using the key point detection model whose weight is updated, until the loss value of the sample image data in a test set is less than the preset expected value, and training is ended.

In this embodiment of this application, if several images labeled with 3D hand key point coordinates are used as one piece of sample image data, and a large amount of such sample image data is used as an input for model training, an obtained key point detection model may be used to infer 3D hand key point coordinates corresponding to to-be-detected image data. For ease of description, this key point detection model may be referred to as a first key point detection model below.

If several images labeled with 3D hand key point coordinates and camera statuses are used as one piece of sample image data, and a large amount of such sample image data is used as an input for model training, an obtained key point detection model may be used to infer 3D hand key point coordinates and a camera status corresponding to to-be-detected image data. For ease of description, this key point detection model may be referred to as a second key point detection model below.

After the process of training the key point detection model is described, the following describes in detail a gesture recognition process in this application.

In some embodiments, when gesture recognition needs to be performed in a process of using a head-mounted wearable device, to-be-detected image data collected by using a plurality of cameras includes more information, and then gesture recognition processing is performed on the currently collected to-be-detected image data by using the foregoing trained key point detection model, to improve accuracy of gesture recognition in a complex scene.

FIG. 6 is an example of a schematic flowchart of a gesture recognition method according to an embodiment of this application. The method is applied to a head-mounted wearable device. The head-mounted wearable device includes at least two types of the following cameras: a grayscale camera, a color camera, a depth camera, and an event camera. The gesture recognition method includes the following steps.

Step 601: The head-mounted wearable device obtains first to-be-detected image data, where the first to-be-detected image data includes images captured by the at least two types of cameras at a first moment.

In this embodiment of this application, when a user uses the head-mounted wearable device, the at least two types of cameras in the head-mounted wearable device are in an on state, and the first to-be-detected image data includes images shot by all the cameras in the head-mounted wearable device. For example, the head-mounted wearable device includes a binocular grayscale camera, a binocular color camera, a depth camera, and an event camera, and the first to-be-detected image data includes six images: a first grayscale image and a second grayscale image captured by the binocular grayscale camera, a first color image and a second color image captured by the binocular color camera, a depth image captured by the depth camera, and an event image captured by the event camera.

Step 602: The head-mounted wearable device inputs the first to-be-detected image data into a trained key point detection model, to obtain a first group of 3D hand key point coordinates output by the key point detection model.

The key point detection model in step 602 may be the foregoing first key point detection model, or may be the foregoing second key point detection model. The first key point detection model is used as an example. The first grayscale image, the second grayscale image, the first color image, the second color image, the depth image, and the event image are input into the first key point detection model, and a first group of 3D hand key point coordinates is output.

For example, the first group of 3D hand key point coordinates may include 42 key point coordinates. For example, first 21 key point coordinates represent key point coordinates of a left hand, and last 21 key point coordinates represent key point coordinates of a right hand. If the first to-be-detected image data includes two hands, the first group of 3D hand key points coordinates includes 42 hand key point coordinates. If the first to-be-detected image data includes a single hand, for example, includes only the left hand, after the first to-be-detected image data is input into the first key point detection model, the first group of output 3D hand key points coordinates includes 42 key point coordinates, and last 21 key point coordinates are all (0, 0, 0), that is, 21 key point coordinates of the right hand are all (0, 0, 0).

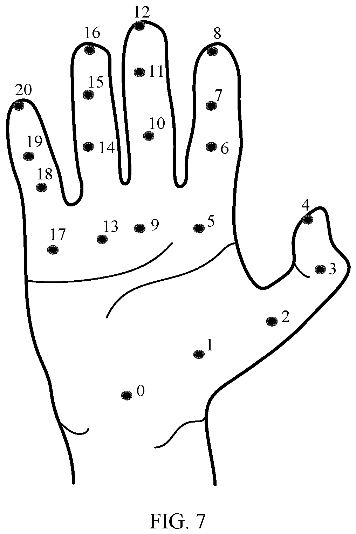

A location of a key point included in a single hand is described by using the right hand as an example. The single hand includes 21 hand key points, and specific locations may be numbered from 0 to 20. As shown in FIG. 7, the 21 hand key points include one palm base key point (key point 0) and 20 finger key points (key points 1 to 20). Each finger includes four key points. In the 20 finger key points, key points 1, 5, 9, 13, and 17 are finger base key points, key points 2, 6, 10, 14, and 18 are proximal finger key points, key points 3, 7, 11, 15, and 19 are distal finger key points, and key points 4, 8, 12, 16, and 20 are fingertip key points.

Step 603: The head-mounted wearable device recognizes a gesture type corresponding to the first to-be-detected image data based on the first group of 3D hand key point coordinates.

For example, the head-mounted wearable device may extract a gesture feature parameter based on the first group of 3D hand key point coordinates, and then input the gesture feature parameter into a first gesture recognition model, to obtain the output gesture type. The first gesture recognition model may be obtained through training based on a large amount of gesture feature data labeled with a preset gesture type.

For example, the head-mounted wearable device may directly input the first group of 3D hand key point coordinates to a second gesture recognition model, to obtain the output gesture type. The second gesture recognition model may be obtained through training based on a plurality of groups of 3D hand key point coordinates labeled with a preset gesture type.

Optionally, if the key point detection model in step 602 is the foregoing second key point detection model, in step 602, the head-mounted wearable device inputs the first to-be-detected image data into the trained second key point detection model. In addition to outputting the first group of 3D hand key point coordinates, the second key point detection model may further output a first group of camera status values. The first group of camera status values may be used to adjust statuses, at a second moment, of the cameras included in the head-mounted wearable device. The second moment is a next moment of the first moment. All types of cameras in the head-mounted wearable device are properly used by using the camera status values output by the second key point detection model. For example, the first group of camera status values includes a camera status value V1 of the binocular grayscale camera, a camera status value V2 of the binocular color camera, a camera status value V3 of the depth camera, and a camera status value V4 of the event camera. The first group of camera status values may reflect environment information at the first moment. For example, the first group of camera status values includes V1, V2, V3, and V4, which are 0, 0, 1, and 1 respectively. Herein, V1 is 0 and V2 is 0, indicating that images captured by the binocular grayscale camera and the binocular color camera include very little information, which is not helpful for gesture recognition. Therefore, the binocular grayscale camera and the binocular color camera may be turned off to reduce power consumption of the head-mounted wearable device, and the depth camera and the event camera may be kept to be in the on state. In this case, at the next moment of the first moment, the depth camera and the event camera in the head-mounted wearable device separately capture images, and the binocular grayscale camera and the binocular grayscale camera no longer capture images.

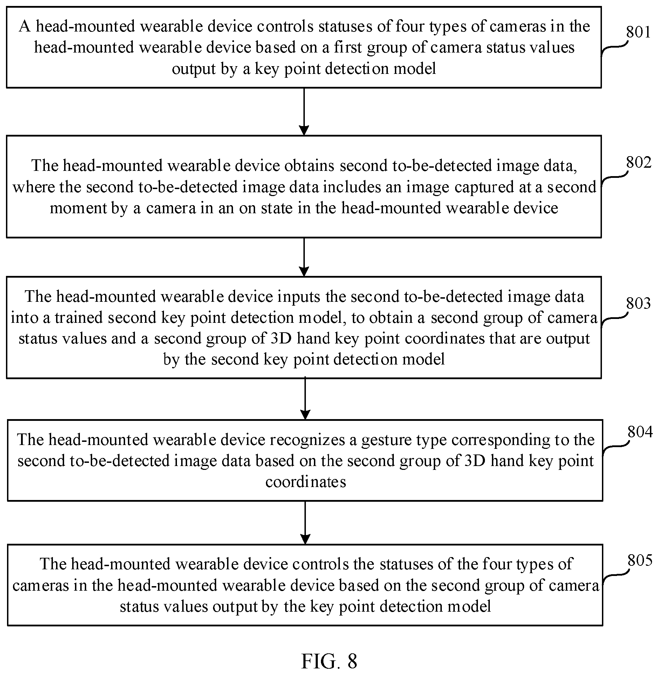

In some embodiments, when the key point detection model in step 602 is the foregoing second key point detection model, after step 603, as shown in FIG. 8, the gesture recognition method may further include step 801 to step 805.

Step 801: The head-mounted wearable device controls statuses of the four types of cameras in the head-mounted wearable device based on the first group of camera status values output by the key point detection model.

In a possible implementation, if a camera status of each camera included in the head-mounted wearable device does not match the first group of camera status values, the status of the camera, in the head-mounted wearable device, that does not match the first group of camera status values is adjusted based on the first group of camera status values.

For example, if all of the binocular grayscale camera, the binocular color camera, the depth camera, and the event camera included in the head-mounted wearable device are in the on state at the first moment, and the first group of camera status values output by the second key point detection model is respectively 1, 0, 1, and 1, where 1 represents the on state, and 0 represents an off state, it may be learned, based on statuses of all types of cameras in the head-mounted wearable device at the first moment and the first group of camera status values, that at the first moment, the binocular color camera in the head-mounted wearable device does not match V2 that is 0, in the first group of camera status values, and the binocular color camera is turned off, while the binocular grayscale camera, the depth camera, and the event camera are still kept to be in the on state. In this way, the binocular grayscale camera, the depth camera, and the event camera may capture images at the second moment. For another example, if all of the binocular grayscale camera, the binocular color camera, the depth camera, and the event camera included in the head-mounted wearable device are in the on state at the first moment, and the camera status values output by the second key point detection model are 0, 0, 0, and 1, where 1 represents the on state, and 0 represents an off state, it may be learned, based on statuses of all types of cameras in the head-mounted wearable device at the first moment and the first group of camera status values, that at the first moment, the binocular grayscale camera, the binocular color camera, and the depth camera in the head-mounted wearable device do not match V1, V2, and V3 that are 0 in the first group of camera status values, and the binocular grayscale camera, the binocular color camera, and the depth camera are turned off, while the event camera is kept in the on state. In this way, only the event camera can capture an image at the second moment.

Step 802: The head-mounted wearable device obtains second to-be-detected image data, where the second to-be-detected image data includes an image captured at the second moment by a camera in the on state in the head-mounted wearable device.

For example, if the first group of camera status values is 1, 0, 1, and 1, the binocular grayscale camera, the depth camera, and the event camera are in the on state at the second moment, and the second to-be-detected image data includes two grayscale images P11 and P12 captured by the binocular grayscale camera, a depth image P13 captured by the depth camera, and an event image P14 captured by the event camera.

Step 803: The head-mounted wearable device inputs the second to-be-detected image data into the trained second key point detection model, to obtain a second group of camera status values and a second group of 3D hand key point coordinates that are output by the second key point detection model.

The second group of camera status values may be used to adjust statuses, at a third moment, of the cameras included in the head-mounted wearable device. The third moment is a next moment of the second moment.

Step 804: The head-mounted wearable device recognizes a gesture type corresponding to the second to-be-detected image data based on the second group of 3D hand key point coordinates.

For a specific implementation of recognizing the gesture type in step 804, refer to the related descriptions of step 603. Details are not described herein again.

Step 805: The head-mounted wearable device controls the statuses of the four types of cameras in the head-mounted wearable device based on the second group of camera status values output by the key point detection model.

If the camera status of each camera included in the head-mounted wearable device does not match the second group of camera status values, the status of the camera, in the head-mounted wearable device, that does not match the second group of camera status values is adjusted based on the second group of camera status values.

For example, the first group of camera status values is 0, 0, 0, and 1, that is, at the second moment, in the cameras included in the head-mounted wearable device, all of the binocular grayscale camera, the binocular color camera, and the depth camera are in the off state, and the event camera is in the on state, and the second group of camera status values is 0, 1, 1, and 1. In this case, both the binocular color camera and the depth camera are in the off state, and do not match V2 and V3 in the second group of camera status values. Therefore, the binocular color camera and the depth camera are turned on, that is, at the third moment, the binocular grayscale camera is in the off state, and all of the binocular color camera, the depth camera, and the event camera are in the on state. In this way, the binocular color camera, the depth camera, and the event camera separately capture images at the third moment.

According to the foregoing embodiment, after collecting to-be-detected image data at a current moment, the head-mounted wearable device inputs the to-be-detected image data into the second key point detection model, and a group of 3D hand key point coordinates and a group of camera status values may be output. The group of 3D hand key point coordinates output by the model may be used to recognize a gesture type at the current moment, and the group of camera status values output by the model may be used to determine a status of a camera used to collect to-be-detected image data at a next moment. The second key point detection model is obtained through training based on sample images captured in various scenes. Therefore, reference to environmental information is also made for the group of camera status values output by the model, so that the to-be-detected image data is dynamically collected with reference to an environment.

In any one of the foregoing embodiments, if there is a camera in the off state in the cameras included in the head-mounted wearable device, when the head-mounted wearable device determines that a trigger condition is met, the camera in the off state is turned on, that is, all the cameras are in the on state. The trigger condition includes at least one of the following:
(1) A use scenario of the head-mounted wearable device is switched.
   For example, the use scenario of the head-mounted wearable device is switched from playing badminton to watching a movie. For another example, the use scenario is switched from watching a movie to a game scenario.
(2) Ambient brightness changes.
   For example, if a change value of the ambient brightness exceeds a first threshold, it indicates that the ambient brightness changes.
(3) A hand movement speed changes.
   For example, if a hand movement speed change exceeds a second threshold, it indicates that the hand movement speed changes.
(4) Gesture complexity changes.

According to the foregoing embodiment, if the trigger condition is met, the camera in the off state is turned on. In this way, all the cameras included in the head-mounted wearable device are in the on state when the to-be-detected image data is collected at the next moment.

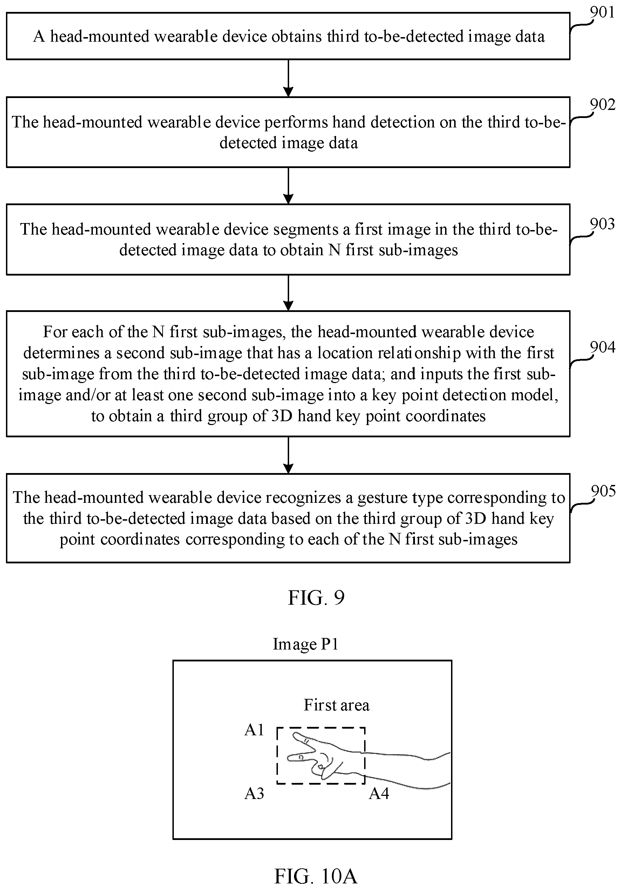

FIG. 9 is an example of a schematic flowchart of another gesture recognition method according to an embodiment of this application. The method is applied to a head-mounted wearable device. The head-mounted wearable device includes at least two types of the following cameras: a grayscale camera, a color camera, a depth camera, and an event camera. The gesture recognition method includes the following steps.

Step 901: The head-mounted wearable device obtains third to-be-detected image data, where the third to-be-detected image data includes images captured by the at least two types of cameras.

For example, the head-mounted wearable device includes a binocular grayscale camera, a binocular color camera, a depth camera, and an event camera, and the third to-be-detected image data includes a first grayscale image (for example, referred to as an image P1) and a second grayscale image (for example, referred to as an image P2) captured by the binocular grayscale camera, a first color image (for example, referred to as an image P3) and a second color image (for example, referred to as an image P4) captured by the binocular color camera, a depth image (for example, referred to as an image P5) captured by the depth camera, and an event image (for example, referred to as an image P6) captured by the event camera.

Step 902: The head-mounted wearable device performs hand detection on the third to-be-detected image data.

Step 902 is an optional step.

In some embodiments, the head-mounted wearable device may perform hand detection on the first grayscale image and/or the second grayscale image. If a hand is detected, step 903 continues to be performed. Otherwise, step 903 and subsequent steps are not performed. The image P1 is used as an example. The head-mounted wearable device may perform hand detection on the image P1. If a hand is detected in the image P1, step 903 continues to be performed. Otherwise, step 903 and subsequent steps are not performed.

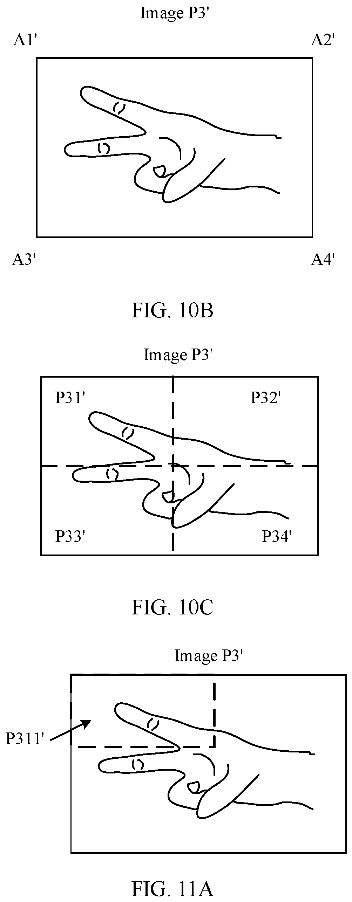

The first grayscale image captured by the binocular grayscale camera is used as an example. The first grayscale image is, for example, an image P1 shown in FIG. 10A. The head-mounted wearable device performs hand detection on the image P1, recognizes that the image P1 includes a single hand, and then determines coordinates of four vertices A1, A2, A3, and A4 of a smallest rectangular area that includes the hand in the image P1. The four vertices of the smallest rectangular area may also be mapped to a coordinate system of another camera, to obtain a mapping area of the smallest rectangular area in an image (for example, the first color image, the second color image, the depth image, or the event image) captured by the corresponding camera. The mapping area is a smallest rectangular area that includes the hand in the another image. For example, the smallest rectangular area in the image P1 shown in FIG. 10A is mapped to the image P3 captured by the binocular color camera, and the coordinates of the vertices A1, A2, A3, and A4 of the smallest rectangular area shown in FIG. 10A are respectively mapped to coordinates in a coordinate system in which the image P3 is located, to obtain a mapping area that is shown in FIG. 10B and that is enclosed by four vertices A1', A2', A3', and A4', and an image corresponding to the mapping area is referred to as a hand image, for example, an image P3' in FIG. 10B.

It should be understood that the smallest rectangular area may be replaced with a smallest square area that includes the hand, or may be another shape that includes the hand. This is not limited herein.

Step 903: The head-mounted wearable device segments a first image in the third to-be-detected image data to obtain N first sub-images, where N is an integer greater than 1.

The first image may be a hand image in any one of the first grayscale image, the second grayscale image, the first color image, and the second color image.

In this embodiment of this application, there may be a plurality of implementations for step 903.

In an implementation A1, the first image in the third to-be-detected image data is segmented based on N equal parts, to obtain the N first sub-images.

For example, N is 4 and the first image is the image P3' shown in FIG. 10B. As shown in FIG. 10C, the image P3' is segmented into four first sub-images: an image P31', an image P32', an image P33', and an image P34'.

In an implementation A2, the first image in the third to-be-detected image data is segmented based on areas in which N hand parts are located, to obtain the N first sub-images.

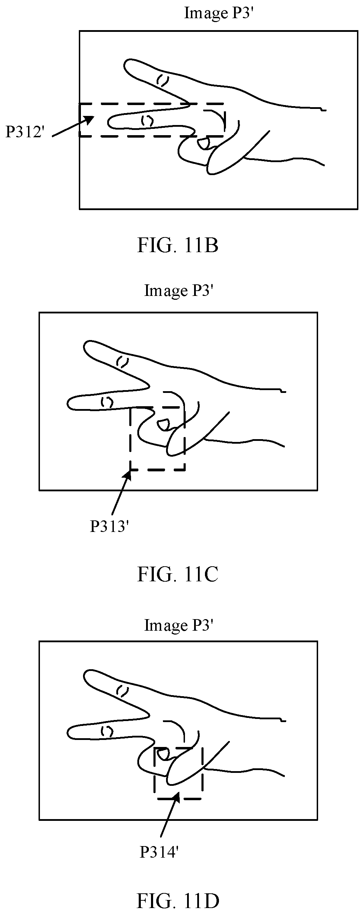

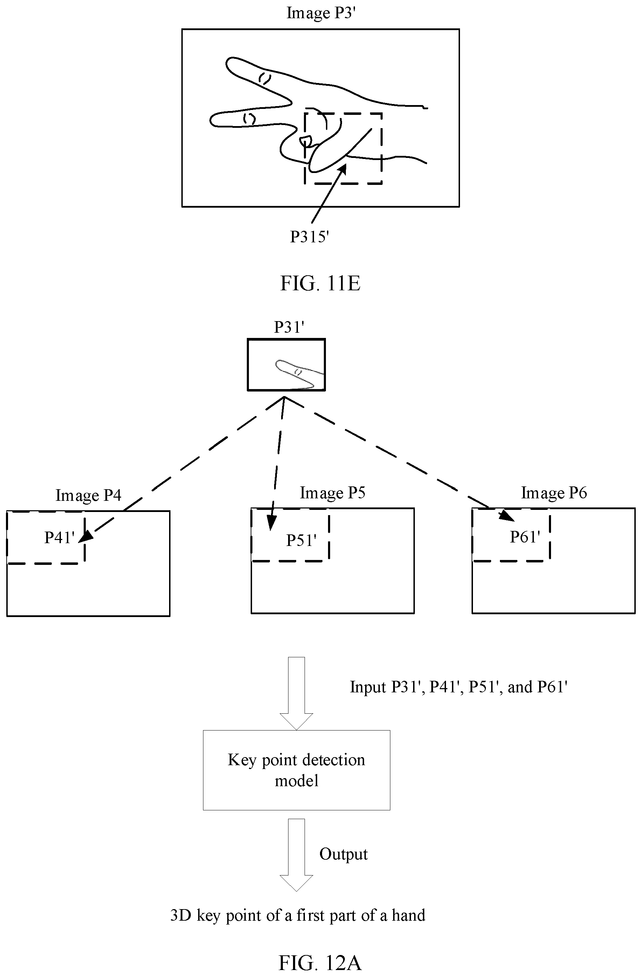

For example, the first image is the image P3' shown in FIG. 10B. A single hand includes five hand parts: a thumb, an index finger, a middle finger, a ring finger, and a little finger. Based on the five hand parts, the image P3' may be segmented based on areas in which the hand parts are located, to obtain an image P311' corresponding to an index finger area shown in FIG. 11A, an image P312' corresponding to a middle finger area shown in FIG. 11B, an image P313' corresponding to a ring finger area shown in FIG. 11C, an image P314' corresponding to a little finger area shown in FIG. 11D, and an image P315' corresponding to a thumb area shown in FIG. 11E.

Step 904: For each of the N first sub-images, the head-mounted wearable device determines a second sub-image that has a location relationship with the first sub-image from the third to-be-detected image data; and inputs the first sub-image and/or at least one second sub-image into a key point detection model, to obtain a third group of 3D hand key point coordinates.

In some embodiments, in step 904, for each of the N first sub-images, the second sub-image that has the location relationship with the first sub-image may be determined from the third to-be-detected image data in the following manner: For each of the N first sub-images, the second sub-image that has the location relationship with the first sub-image is determined from each of at least one second image. Herein, there are a plurality of possible implementations for the at least one second image.

In an implementation B1, each of the N first sub-images is input into the key point detection model, to obtain coordinates of a key point included in each of the first sub-images; then a key point importance indicator corresponding to each first sub-image is determined based on the coordinates of the key point included in each of the N first sub-images; and the at least one second image is determined from the third to-be-detected image data based on the key point importance indicator corresponding to each of the N first sub-images.

For example, the N first sub-images are the image P31', the image P32', the image P33', and the image P34' shown in FIG. 10C. Each of the image P31', the image P32', the image P33', and the image P34' is input into the key point detection model, to obtain output 3D hand key point coordinates corresponding to the image P31', output 3D hand key point coordinates corresponding to the image P32', output 3D hand key point coordinates corresponding to the image P33', and 3D hand key point coordinates corresponding to the image P34'. A 3D hand key point included in each of the image P31', the image P32', the image P33', and the image P34' may be determined based on the 3D hand key point coordinates corresponding to each of the image P31', the image P32', the image P33', and the image P34'. Then, a key point importance indicator corresponding to each of the image P31', the image P32', the image P33', and the image P34' may be determined based on the 3D hand key point included in each of the image P31', the image P32', the image P33', and the image P34'. A finger part included in each first sub-image may be determined by using the 3D hand key point included in each first sub-image, and then the key point importance indicator of each first sub-image is determined based on a key point importance sequence.

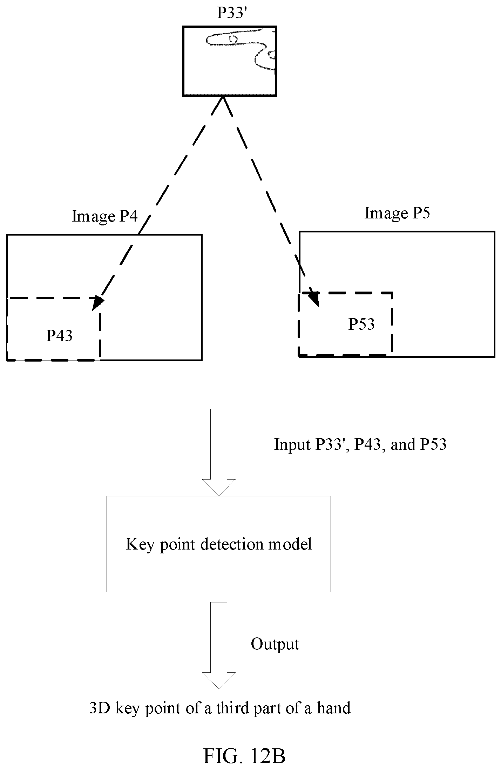

For example, importance of key points is sequentially sorted in descending order as follows: an index fingertip; a finger end; a finger joint; and a wrist point. Greater key point importance indicates that a higher key point importance indicator may be set. The 3D hand key point coordinates are determined based on a principle that greater key point importance (index fingertip>finger end>finger joint>wrist point) indicates that a more complex solution is used to calculate a more accurate 3D hand key point. For example, the key point importance indicator is set to 1, 2, or 3. When the key point importance indicator is 3, a mapping area image corresponding to the first sub-image in the image captured by the binocular color camera, a mapping area image corresponding to the first sub-image in the image captured by the depth camera, and a mapping area image corresponding to the first sub-image in the image captured by the event camera are input into the key point detection model to infer 3D hand key point coordinates included in the first sub-image. When the key point importance indicator is 2, a mapping area image corresponding to the first sub-image in the image captured by the binocular color camera and a mapping area image corresponding to the first sub-image in the image captured by the depth camera are input into the key point detection model to infer 3D hand key point coordinates included in the first sub-image. When the key point importance indicator is 1, a mapping area image corresponding to the first sub-image in the image captured by the binocular color camera is input into the key point detection model to infer 3D hand key point coordinates included in the first sub-image. The following provides descriptions with reference to FIG. 12A to FIG. 12C.
(1) The image P31' includes an index finger tip, and it is determined, based on the key point importance principle, that a key point importance indicator corresponding to the image P31' is 3. A 3D key point corresponding to a hand part included in the image P31' may be determined by using the image P3, the image P4, the image P5, and the image P6.
   As shown in FIG. 12A, based on coordinates of four vertices of the image P31', the image P31' is mapped to each of the image P4, the image P5, and the image P6, to obtain an image P41 that has a location correspondence with the image P31' in the image P4, an image P51 that has a location correspondence with the image P31' in the image P5, and an image P61 that has a location correspondence with the image P31' in the image P6. Then, the image P31', the image P41, the image P51, and the image P61 are input into the key point detection model, to obtain the 3D key point corresponding to the hand part included in the image P31'.
(2) The image P32' includes an index finger end, and a key point importance indicator corresponding to the image P32' is 1. For example, a 3D key point corresponding to a hand part included in the image P32' may be determined by using the image P32'.
(3) The image P33' includes a fingertip such as a middle finger and a ring finger, a finger joint, a finger end, and the like, and it is determined, based on the key point importance principle, that a key point importance indicator corresponding to the image P33' is 2. A 3D key point corresponding to a hand part included in the image P33' may be determined by using the image P3, the image P4, and the image P5.
   As shown in FIG. 12B, based on coordinates of four vertices of the image P33', the image P33' is mapped to each of the image P4 and the image P5, to obtain an image P43 that has a location correspondence with the image P33' in the image P4 and an image P53 that has a location correspondence with the image P33' in the image P5. Then, the image P33', the image P43, and the image P53 are input into the key point detection model, to obtain the 3D key point corresponding to the hand part included in the image P33'.
(4) The image P34' includes a wrist, a thumb, and the like, and it is determined, based on the key point importance principle, that a key point importance indicator corresponding to the image P34' is 2. A 3D key point corresponding to a hand part included in the image P34' may be determined by using the image P3, the image P4, and the image P5.

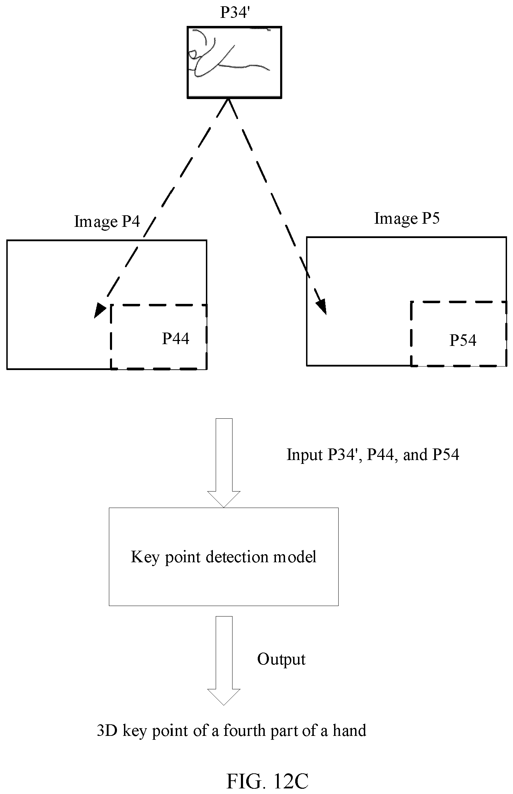

As shown in FIG. 12C, based on coordinates of four vertices of the image P34', the image P34' is mapped to each of the image P4 and the image P5, to obtain an image P44 that has a location correspondence with the image P34' in the image P4 and an image P54 that has a location correspondence with the image P34' in the image P5. Then, the image P34', the image P44, and the image P54 are input into the key point detection model, to obtain the output 3D key point corresponding to the hand part included in the image P34'.

According to the foregoing example, an image may be divided into areas, and then a 3D key point included in each area may be determined by using different policies based on importance of key points in different areas, so that a more accurate 3D hand key point can be obtained. In addition, for an area with low key point importance, a 3D key point included in a corresponding area is calculated by using fewer images, so that computing power can be saved, and device power consumption can be reduced.

In an implementation B2, the at least one second image includes the depth image and the event image.

Based on the implementation B2, for each of the N first sub-images, a sub-depth image that has a location correspondence with the first sub-image may be determined from the depth image, and a sub-event image that has a location correspondence with the first sub-image may be determined from the event image; and then the sub-depth image that has the location correspondence with the first sub-image and the sub-event image that has the location correspondence with the first sub-image are input into the key point detection model, to obtain a third group of 3D hand key point coordinates.

For example, the N first sub-images are the image P311' corresponding to the index finger area shown in FIG. 11A, the image P312' corresponding to the middle finger area shown in FIG. 11B, the image P313' corresponding to the ring finger area shown in FIG. 11C, the image P314' corresponding to the little finger area shown in FIG. 11D, and the image P315' corresponding to the thumb area shown in FIG. 11E. Each of the image P311', the image P312', the image P313', the image P314', and the image P315' that are obtained through segmentation is mapped to the image P5 and the image P6, to obtain sub-images that are of each finger area and that are respectively mapped to the image P5 and the image P6. For each finger area, sub-images that are of the finger area and whose coordinates are mapped to the image P5 and the image P6 are input into the key point detection model, to obtain an output 3D key point included in the finger area.

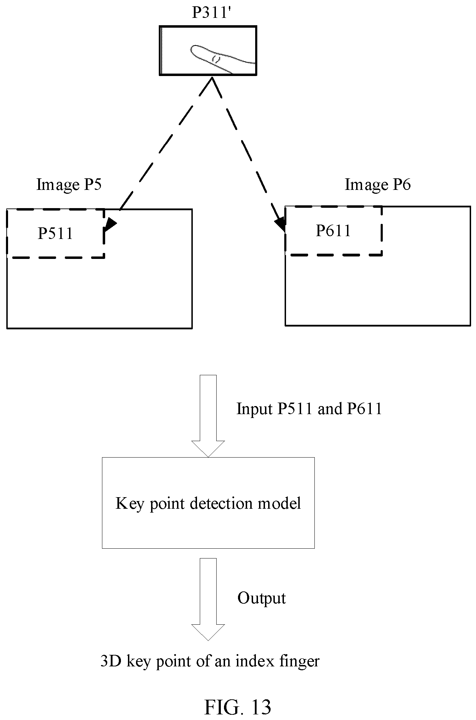

The image P311' corresponding to the index finger area is used as an example. As shown in FIG. 13, coordinates corresponding to the image P311' are mapped to the image P5 and the image P6, to obtain an image P511 corresponding to the coordinates of the image P311' in the image P5 and an image P611 corresponding to the coordinates of the image P311' in the image P6. Then, the image P511 and the image P611 are input into the key point detection model, to obtain output 3D key point coordinates of the index finger.

The image P312' corresponding to the middle finger area is used as an example. Coordinates corresponding to the image P312' are mapped to the image P5 and the image P6, to obtain an image P512 corresponding to the coordinates of the image P312' in the image P5 and an image P612 corresponding to the coordinates of the image P312' in the image P6. Then, the image P512 and the image P612 are input into the key point detection model, to obtain output 3D key point coordinates of the middle finger.

Similarly, 3D key point coordinates of the ring finger, the little finger, and the thumb are obtained.

According to the foregoing embodiment, an image is divided into areas based on each finger, and then images captured by the depth camera and the event camera are used in different areas, so that a more accurate 3D key point of each finger can be obtained.

Step 905: The head-mounted wearable device recognizes a gesture type corresponding to the third to-be-detected image data based on the third group of 3D hand key point coordinates corresponding to each of the N first sub-images.

For a specific implementation of recognizing the gesture type in step 905, refer to the related descriptions of step 603. Details are not described herein again.

In this embodiment of this application, because the third to-be-detected image data includes images captured by a plurality of types of cameras, even if the third to-be-detected image data is obtained in a complex scene or a weak-light scene, sufficient information can be obtained for gesture recognition, thereby improving accuracy of gesture recognition in the complex scene. In addition, 3D key point recognition is performed on different areas of an image in the third to-be-detected image data, to implement accurate recognition in different areas.

In some embodiments, the gesture recognition method may be implemented based on gesture complexity or a hand movement speed.

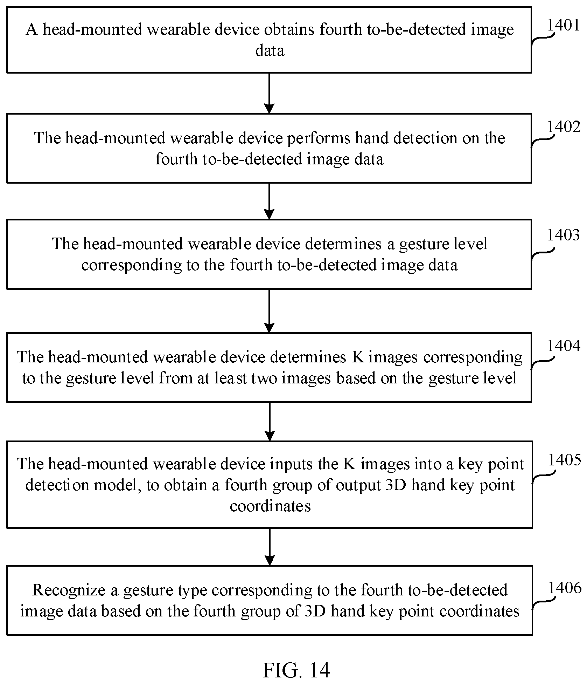

FIG. 14 is an example of a schematic flowchart of another gesture recognition method according to an embodiment of this application. The method is applied to a head-mounted wearable device. The head-mounted wearable device includes at least two types of the following cameras: a binocular grayscale camera, a binocular color camera, a depth camera, and an event camera. The gesture recognition method includes the following steps.

Step 1401: The head-mounted wearable device obtains fourth to-be-detected image data, where the fourth to-be-detected image data includes at least two types of images captured by the at least two cameras.

For example, the fourth to-be-detected image data includes a first grayscale image and a second grayscale image captured by the binocular grayscale camera, a first color image and a second color image captured by the binocular color camera, a depth image captured by the depth camera, and an event image captured by the event camera.

For a specific implementation of step 1401, refer to the related descriptions of step 801. Details are not described herein again.

Step 1402: The head-mounted wearable device performs hand detection on the fourth to-be-detected image data.

For a specific implementation of step 1401, refer to the related descriptions of step 802. Details are not described herein again.

Step 1403: The head-mounted wearable device determines a gesture level corresponding to the fourth to-be-detected image data.

The gesture level corresponding to the fourth to-be-detected image data may be determined based on gesture complexity or a hand movement speed corresponding to the fourth to-be-detected image data. For example, the gesture complexity is classified into M levels, and each level corresponds to one gesture level. A more complex gesture indicates a higher level of gesture complexity, and an image including more information may be selected for inferring a 3D hand key point. Similarly, for example, the hand movement speed is classified into M levels. A higher hand movement speed indicates a higher level, and an image including more information may be selected for inferring a 3D hand key point.

Step 1404: The head-mounted wearable device determines K images corresponding to the gesture level from the at least two images based on the gesture level, where K is an integer greater than 1.

For example, M is 4. When the level is 1, the corresponding K images include images captured by the binocular grayscale camera, that is, the first grayscale image (for example, referred to as an image P1) and the second grayscale image (for example, referred to as an image P2). When the level is 2, the corresponding K images include images captured by the binocular grayscale camera and the binocular color camera, that is, the first grayscale image, the second grayscale image, the first color image (for example, referred to as an image P3), and the second color image (for example, referred to as an image P4). When the level is 3, the corresponding K images include images captured by the binocular grayscale camera, the binocular color camera, and the depth camera, that is, the first grayscale image, the second grayscale image, the first color image, the second color image (for example, referred to as an image P4), and the depth image (for example, referred to as an image P5). When the level is 4, the corresponding K images include images in the binocular grayscale camera, the binocular color camera, the depth camera, and the event camera, that is, the first grayscale image, the second grayscale image, the first color image, the second color image, the depth image (for example, referred to as an image P5), and the event image (for example, referred to as an image P6).

In some embodiments, a third image in the fourth to-be-detected image data may be first obtained, where the third image may be any one of the first grayscale image, the second grayscale image, the first color image, and the second color image, and then a hand image that includes a hand in the third image is determined. For example, the third image is the image P1 shown in FIG. 10A, and the hand image is an image P1'. Then, based on vertex coordinates of the hand image, the hand image is mapped to each image corresponding to the gesture level. For example, the image P1' is mapped to a corresponding sub-image P2' in the image P2, the image P1' is mapped to a corresponding sub-image P3' in the image P3, the image P1' is mapped to a corresponding sub-image P4' in the image P4, the image P1' is mapped to a corresponding sub-image P5' in the image P5, and the image P1' is mapped to a corresponding sub-image P6' in the image P6. In this example, the K images include the sub-image P1', the sub-image P2', the sub-image P3', the sub-image P4', the sub-image P5', and the sub-image P6'.

Step 1405: The head-mounted wearable device inputs the K images into a key point detection model, to obtain a fourth group of output 3D hand key point coordinates. The key point detection model is obtained through training based on at least one piece of sample image data, and each piece of sample image data includes at least two preset gesture images labeled with 3D hand key point coordinates.

In an example, it is determined, based on P1, that the gesture complexity is 5, and the corresponding K images are the image P1, the image P2, the image P3, the image P4, the image P5, and the image P6. The image P1, the image P2, the image P3, the image P4, the image P5, and the image P6 are input into the key point detection model, to obtain the fourth group of output 3D hand key point coordinates.

For example, it is determined, based on P1, that the gesture complexity is 5, and the corresponding K images are the sub-image P1', the sub-image P2', the sub-image P3', the sub-image P4', the sub-image P5', and the sub-image P6'. The sub-image P1', the sub-image P2', the sub-image P3', the sub-image P4', the sub-image P5', and the sub-image P6' are then input into the key point detection model, to obtain the output 3D hand key point coordinates.

Step 1406: Recognize a gesture type corresponding to the fourth to-be-detected image data based on the fourth group of 3D hand key point coordinates.

For a specific implementation of recognizing the gesture type in step 1406, refer to the related descriptions of step 603. Details are not described herein again.

According to the foregoing example, because the fourth to-be-detected image data includes images captured by a plurality of types of cameras, even if the fourth to-be-detected image data is obtained in a complex scene or a weak-light scene, sufficient information can be obtained for gesture recognition, thereby improving accuracy of gesture recognition in the complex scene. In addition, an image for inferring a 3D hand key point is determined based on different gesture levels, so that computing power resources of the head-mounted wearable device can be properly used.

In the foregoing embodiments provided in this application, the method provided in embodiments of this application is described from a perspective of the head-mounted wearable device serving as an execution body. To implement the functions in the method provided in embodiments of this application, the head-mounted wearable device may include a hardware structure and/or a software module, and the functions are implemented by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

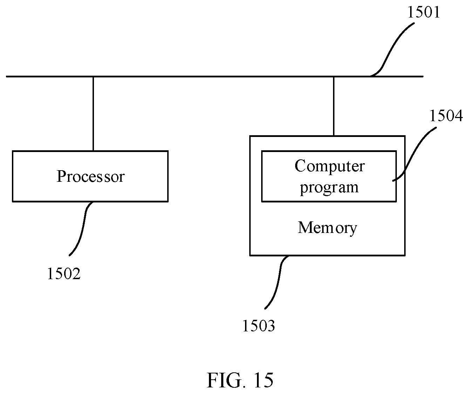

For example, when hardware is used for implementation, for a hardware implementation of the head-mounted wearable device, refer to FIG. 15 and related descriptions thereof.

With reference to FIG. 15, the head-mounted wearable device may include one or more processors 1502, a memory 1503, one or more applications (not shown), and one or more computer programs 1504. The foregoing components may be connected by using one or more communication buses 1501. The one or more computer programs 1504 are stored in the memory 1503 and are configured to be executed by the one or more processors 1502. The one or more computer programs 1504 include instructions, and the instructions may be used to perform the method in any one of the foregoing embodiments.

An embodiment of this application further provides a computer storage medium. The computer storage medium stores computer instructions. When the computer instructions are run on a head-mounted wearable device, the head-mounted wearable device is enabled to perform the foregoing related method steps to implement the method in the foregoing embodiments.

An embodiment of this application further provides a computer program product. When the computer program product is run on a computer, the computer is enabled to perform the foregoing related steps to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The head-mounted wearable device, the computer storage medium, the computer program product, or the chip provided in embodiments of this application is configured to perform the corresponding method provided above. Therefore, for beneficial effects that can be achieved by the head-mounted wearable device, the computer storage medium, the computer program product, or the chip, refer to the beneficial effects in the corresponding method provided above. Details are not described herein again.

Based on the descriptions of the foregoing implementations, a person skilled in the art may understand that for convenient and brief description, division into the foregoing functional modules is merely used as an example for description. During actual application, the foregoing functions may be allocated to different functional modules and implemented based on requirements. In other words, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may be one physical unit or a plurality of physical units, that is, may be located at one location, or may be distributed at a plurality of different locations. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing content is merely specific implementations of this application, but the protection scope of this application is not limited thereto. Any variation or replacement readily figured out by a person skilled in and familiar with the art within the technical scope disclosed in this application shall fall within the protection scope of this application. Therefore, the protection scope of this application shall be subject to the protection scope of the claims.

## Claims

1. A gesture recognition method, applied to a head-mounted wearable device, wherein the head-mounted wearable device comprises at least two types of the following cameras: a grayscale camera, a color camera, a depth camera, and an event camera, and the method comprises:
obtaining first to-be-detected image data, wherein the first to-be-detected image data comprises at least two images captured by the at least two types of cameras at a first moment;
inputting the first to-be-detected image data into a key point detection model, to obtain a first group of 3D hand key point coordinates, wherein the key point detection model is obtained through training based on at least one piece of sample image data, each piece of sample image data comprises at least two preset gesture images labeled with 3D hand key point coordinates, and the at least two preset gesture images are captured by different types of cameras; and
recognizing a gesture type corresponding to the first to-be-detected image data based on the first group of 3D hand key point coordinates.

2. The method according to claim 1, wherein each of the at least two preset gesture images is further labeled with a camera status value; and
inputting the first to-be-detected image data into the key point detection model, to obtain the first group of 3D hand key point coordinates comprises:
inputting the first to-be-detected image data into the key point detection model, to obtain the first group of 3D hand key point coordinates and a first group of camera status values corresponding to the cameras comprised in the head-mounted wearable device.

3. The method according to claim 2, wherein the method further comprises:
if a camera status of each camera comprised in the head-mounted wearable device does not match the first group of camera status values, adjusting, based on the first group of camera status values, the status of the camera, in the head-mounted wearable device, that does not match the first group of camera status values.

4. The method according to claim 3, wherein after adjusting, based on the first group of camera status values, the status of the camera that does not match the first group of camera status values, the method further comprises:
obtaining second to-be-detected image data, wherein the second to-be-detected image data comprises an image captured at a second moment by a camera in an on state in the head-mounted wearable device, and the second moment is a next moment of the first moment;
inputting the second to-be-detected image data into the key point detection model, to obtain a second group of hand key point coordinates; and
recognizing a gesture type corresponding to the second to-be-detected image data based on the second group of hand key point coordinates.

5. The method according to any one of claims 2 to 4, wherein the method further comprises:
if there is a camera in an off state in the cameras comprised in the head-mounted wearable device, when the head-mounted wearable device determines that a trigger condition is met, turning on the camera in the off state, wherein
the trigger condition comprises at least one of the following:
a use scenario of the head-mounted wearable device is switched;
a change value of ambient brightness exceeds a first threshold;
a hand movement speed change exceeds a second threshold; and
gesture complexity changes.

6. A gesture recognition method, applied to a head-mounted wearable device, wherein the head-mounted wearable device comprises at least two types of the following cameras: a grayscale camera, a color camera, a depth camera, and an event camera, and the method comprises:
obtaining third to-be-detected image data, wherein the third to-be-detected image data comprises at least one grayscale image captured by the grayscale camera, at least one color image captured by the color camera, a depth image captured by the depth camera, and an event image captured by the event camera;
segmenting a first image in the third to-be-detected image data to obtain N first sub-images, wherein the first image is a hand image in any one of the at least one grayscale image and the at least one color image, and N is an integer greater than 1;
performing the following steps for each of the N first sub-images:
determining a second sub-image that has a location relationship with the first sub-image from each of at least one second image, wherein the at least one second image comprises at least one image other than the first image in the third to-be-detected image data; and
inputting the first sub-image and/or at least one second sub-image into a key point detection model, to obtain a third group of output 3D hand key point coordinates corresponding to the first sub-image, wherein the key point detection model is obtained through training based on at least one piece of sample image data, each piece of sample image data comprises at least two preset gesture images labeled with 3D hand key point coordinates, and L is an integer greater than 1; and
recognizing a gesture type corresponding to the third to-be-detected image data based on the third group of 3D hand key point coordinates corresponding to each of the N first sub-images.

7. The method according to claim 6, wherein before determining the second sub-image that has the location relationship with the first sub-image from each of the at least one second image, the method further comprises:
inputting each of the N first sub-images into the key point detection model, to obtain coordinates of a key point comprised in each of the first sub-images;
determining a key point importance indicator corresponding to each first sub-image based on the coordinates of the key point comprised in each of the N first sub-images; and
determining the at least one second image from the third to-be-detected image data based on the key point importance indicator corresponding to each of the N first sub-images.

8. The method according to claim 6, wherein the at least one second image comprises the depth image and the event image.

9. The method according to any one of claims 6 to 8, wherein segmenting the first image in the third to-be-detected image data to obtain the N first sub-images comprises:
segmenting the first image in the third to-be-detected image data based on N equal parts, to obtain the N first sub-images; or
segmenting the first image in the third to-be-detected image data based on areas in which N hand parts are located, to obtain the N first sub-images.

10. The method according to any one of claims 6 to 9, wherein before segmenting the first image in the third to-be-detected image data to obtain the N first sub-images, the method further comprises:
determining that the third to-be-detected image data comprises a hand.

11. A gesture recognition method, applied to a head-mounted wearable device, wherein the head-mounted wearable device comprises at least two types of the following cameras: a grayscale camera, a color camera, a depth camera, and an event camera, and the method comprises:
obtaining fourth to-be-detected image data, wherein the fourth to-be-detected image data comprises at least two images captured by the at least two types of cameras;
determining a gesture level corresponding to the fourth to-be-detected image data;
determining K images corresponding to the gesture level from the at least two images based on the gesture level, wherein K is an integer greater than 1;
inputting the K images into a key point detection model, to obtain a fourth group of output 3D hand key point coordinates, wherein the key point detection model is obtained through training based on at least one piece of sample image data, each piece of sample image data comprises at least two preset gesture images labeled with 3D hand key point coordinates, and L is an integer less than or equal to N; and
recognizing a gesture type corresponding to the fourth to-be-detected image data based on the fourth group of 3D hand key point coordinates.

12. The method according to claim 11, wherein the gesture level is determined based on gesture complexity or a hand movement speed.

13. A head-mounted wearable device, comprising a processor, a memory, and a display, wherein
the display is configured to display a user interface; and
the memory is configured to store one or more computer programs, and when the computer programs are executed by the processor, the head-mounted wearable device is enabled to perform the method according to any one of claims 1 to 12.

14. A computer-readable storage medium, wherein the computer-readable storage medium comprises a computer program, and when the computer program is run on a head-mounted wearable device, the head-mounted wearable device is enabled to perform the method according to any one of claims 1 to 12.

15. A computer program product, wherein the computer program product stores a computer program, the computer program comprises program instructions, and when the program instructions are executed by a computer, the computer is enabled to perform the method according to any one of claims 1 to 12.
